# EUROPÄISCHE PATENTANMELDUNG

(11) **EP 4 596 467 A1**
(43) Veröffentlichungstag der Anmeldung: **06.08.2025**
(21) Anmeldenummer: 25153456.6
(22) Anmeldetag: 23.01.2025
(51) Int. Cl.: B65G 53/46, A62C 2/06, A62C 3/04, A62C 3/06

(54) **SCHUTZSYSTEM MIT EINER ZELLENRADSCHLEUSE FÜR SCHÜTTGUT**

(30) Priorität: 30.01.2024 DE 102024200825
(71) Anmelder: Coperion GmbH, 70469 Stuttgart (DE)
(72) Erfinder: Zinser, Bruno, 88289 Waldburg (DE); Fuest, Cornel, 88212 Ravensburg (DE)
(74) Vertreter: Rau, Schneck & Hübner Patentanwälte Rechtsanwälte PartGmbB

(57) **Zusammenfassung**

Ein Schutzsystem, insbesondere für die Schüttgutförderung, umfasst eine Zellenradschleuse (2) für Schüttgut mit einem einen Innenraum (4) aufweisendes Gehäuse (3) mit einer Einlauföffnung (35) und einer Auslauföffnung (36), Seitendeckeln (21, 22), die den Innenraum (4) stirnseitig begrenzen, einem in dem Innenraum (4) um eine Längsachse (8) drehantreibbar angeordneten Zellenrad (7), das an den Seitendeckeln (21, 22) gehalten ist, sowie einer Anhalteeinheit (16) zum gezielten Anhalten einer Drehbewegung des Zellenrades (7), wobei die Anhalteeinheit (16) mit dem Zellenrad (7) zusammenwirkt, eine an die Zellenradschleuse (2) angeschlossene Schüttgutförderleitung (12, 13), ein entlang der Schüttgutförderleitung (12, 13) angeordneter Sensor (14) zur Erfassung einer auf die Schüttgutförderleitung (12, 13) wirkenden Explosion, und eine Steuerungseinheit (15), die mit dem Sensor (14) zum Erhalt eines von dem Sensor (14) erzeugten Explosionssignals in Signalverbindung steht, wobei die Steuerungseinheit (15) mit der Anhalteeinheit (16) in Signalverbindung steht und dazu eingerichtet ist, nach Erhalt des Explosionssignals ein Anhaltesignal an die Anhalteeinheit (16) zu übermitteln, und wobei die Anhalteeinheit (16) dazu eingerichtet ist, nach Erhalt des Anhaltesignals eine Drehbewegung des Zellenrades (7) in einem veränderlich festlegbaren Anhaltezeitraum anzuhalten.

## Beschreibung

Der Inhalt der deutschen Patentanmeldung DE 10 2024 200 825.7 wird durch Bezugnahme hierin aufgenommen.

Die Erfindung betrifft ein Schutzsystem mit einer Zellenradschleuse für Schüttgut.

DE 10 2006 017 856 A1 offenbart eine Zellenradschleuse für großes Schüttgut mit geringer Antriebsleistung.

AT 516 793 A1 offenbart eine Zellenradschleuse und eine Sandungsanlage für ein Schienenfahrzeug mit verbessertem Ansprechverhalten.

Gemäß DIN EN 15089:2009-07 "Explosions-Entkopplungssysteme" werden darunter Schutzsysteme verstanden, die die Ausbreitung einer Explosionsdruckwelle und einer Flamme oder nur einer Flamme über Verbindungsrohre oder Verbindungskanäle in andere Teile der Apparatur oder Anlagenbereiche verhindern. Gemäß dieser Norm werden Zellenradschleusen als passive Explosions-Entkopplungseinrichtungen verstanden, deren Wirksamkeit auf Flammendurchschlagsicherheit und Explosionsfestigkeit separat nachgewiesen werden müssen.

Bei einer Explosion kann ein Drehantrieb einer Zellenradschleuse stromlos geschaltet werden. Es wurde gefunden, dass das Zellenrad im stromlosen Zustand weiter dreht, so dass das Risiko besteht, dass nach der Explosion eine Druckwelle und/oder eine Flamme die Zellenradschleuse passiert, also von der einen Seite der Zellenradschleuse durch sie hindurch auf die andere Seite der Zellenradschleuse gelangt. Untersuchungen haben gezeigt, dass bei einem unkontrollierten Nachlaufen der Zellenradschleuse das Zellenrad typischerweise mindestens drei Zellenradkammern weiterdreht. Je nach Baugröße der Zellenradschleuse beträgt die Nachlaufzeit zwischen 1 s und 3 s.

Der Erfindung liegt die Aufgabe zugrunde, die Sicherheit in einem Schutzsystem zu erhöhen, indem insbesondere verhindert ist, dass sich bei einer Explosion eine Druckwelle und/oder eine Flamme unbeabsichtigt durch eine Zellenradschleuse hindurch ausbreitet.

Diese Aufgabe ist erfindungsgemäß gelöst durch ein Schutzsystem mit den im Anspruch 1 angegebenen Merkmalen.

Der Kern der Erfindung besteht darin, dass eine Zellenradschleuse für Schüttgut eine Anhalteeinheit umfasst, die ein gezieltes Anhalten einer Drehbewegung eines Zellenrades der Zellenradschleuse bewirkt. Die Anhalteeinheit ist insbesondere gesteuert betätigbar, insbesondere schaltbar. Insbesondere bremst und/oder blockiert die Anhalteeinheit die Drehbewegung des Zellenrades. Die Anhalteeinheit wirkt insbesondere aktiv. Insbesondere ist eine Reibung des Zellenrades, insbesondere der Zellenradwelle, in dafür vorgesehenen Drehlagern der Zellenradschleuse und/oder an Dichtungen, die insbesondere an der Zellenradwelle reibend anliegen, keine von der Anhalteeinheit verursachte Bremswirkung.

Die Zellenradschleuse umfasst insbesondere mehrere Anhalteeinheiten, die insbesondere unabhängig voneinander aktivierbar sind. Dadurch ist es insbesondere möglich, zunächst eine erste Anhalteeinheit zum Anhalten der Drehbewegung des Zellenrads zu aktivieren. Sofern das Anhalten nicht oder jedenfalls nicht rechtzeitig erfolgt, kann mindestens eine zusätzliche Anhalteeinheit betätigt werden. Die zusätzliche Anhalteinheit ist insbesondere verschieden zu der ersten Anhalteeinheit ausgeführt. Diese Zellenradschleuse ermöglicht eine erhöhte Sicherheit aufgrund der Redundanz der Anhalteeinheiten.

Die Zellenradschleuse umfasst ein Gehäuse, das einen Innenraum, eine Einlauföffnung und eine Auslauföffnung aufweist. Die Zellenradschleuse ist insbesondere als Austragschleuse oder als Durchblasschleuse ausgeführt. Bei der Zellenradschleuse ist an der Einlauföffnung ein Einlaufschacht und an der Auslauföffnung ein Auslaufschacht angeordnet. Der Innenraum ist stirnseitig durch Seitendeckel begrenzt. In dem Innenraum ist das Zellenrad um eine Längsachse drehantreibbar angeordnet. Das Zellenrad ist an den Seitendeckeln gehalten und insbesondere in den Seitendeckeln gelagert, insbesondere drehbar gelagert.

Es wurde erkannt, dass ein unerwünschtes Weiterdrehen des Zellenrades, insbesondere auch nach einem Stromlosschalten eines Drehantriebs des Zellenrades, mittels der Anhalteeinheit reduziert und insbesondere verhindert werden kann. Ein Anhalteweg des Zellenrades, also eine Anhaltedrehbewegung, die das Zellenrad während eines Anhaltezeitraums durchführt, ist minimiert. Der Anhaltezeitraum ist definiert als das Zeitintervall zwischen der Explosion und dem Stillstand des Zellenrades. Insbesondere ist der Anhalteweg so bemessen, dass in Abhängigkeit der Drehgeschwindigkeit des Zellenrades und der Größe der Zellenradkammern sowie der Größe von Einlaufschacht und Auslaufschacht eine unerwünschte Risikoausbreitung zuverlässig verhindert ist.

Die Zellenradschleuse ermöglicht ein effizientes Anhalten des Zellenrades. Die Anhalteeinheit wirkt mit dem Zellenrad mechanisch zusammen. Insbesondere wirkt die Anhalteeinheit unmittelbar mit dem Zellenrad zusammen. Zusätzliche Kopplungselemente sind entbehrlich. Ausfallrisiken der Anhalteeinheit sind reduziert.

Ein Schutzsystem kann insbesondere im Bereich der Schüttgutförderung eingesetzt sein. Das Schutzsystem umfasst eine Zellenradschleuse, eine daran angeschlossene Schüttgutförderleitung, insbesondere eine erste Schüttgutförderleitung, die an den Einlaufschacht angeschlossen ist, und eine zweite Schüttgutförderleitung, die an den Auslaufschacht angeschlossen ist. Entlang mindestens einer Schüttgutförderleitung ist ein Sensor angeordnet, der zur Erfassung einer Explosion dient, die auf die Schüttgutförderleitung wirkt. Der Sensor ist insbesondere ein Explosionserkennungssensor, der insbesondere als Druckerfassungssensor ausgeführt ist. Der Druckerfassungssensor dient zur Erkennung eines plötzlichen Druckanstiegs, also einer Druckerhöhung in einem kurzen Zeitintervall, die als Explosion definiert ist.

Alternativ kann der Explosionserkennungssensor durch eine Kombination aus Drucksensor und Temperatursensor gebildet sein.

Im Fall einer Explosion breitet sich eine Druckwelle mit Schallgeschwindigkeit aus, wobei eine mögliche Flammenfront sich langsamer ausbreitet, Insofern ist die Druckerfassung für die zuverlässige Explosionserkennung ausreichend. Drucksensoren werden insbesondere in Behältern, insbesondere in explosionsdruckentlasteten Behältern, insbesondere in Filtern und/oder in Silos, eingesetzt. In Rohrleitungen werden Drucksensoren insbesondere durch Temperatursensoren ergänzt, da glimmende Produktpartikel weitere Explosionen auslösen können.

Die Druckmembrane des Drucksensors ist insbesondere bündig mit der Oberfläche der Förderleitung verbunden und/oder im oberen Bereich des Behälters außerhalb des Füllbereichs angeordnet. Temperatursensoren sind derart an einer Förderleitung und/oder oberhalb eines Schüttgutkegels eines Schüttgutbehälters angeordnet, dass ihre Optik dem Produkt zugewandt ist.

Als Explosionserkennungssensoren können je nach Zündfähigkeit des Produkts auch Rauchgassensoren in einem Behälter eingesetzt werden.

Als Explosionserkennungssensor können auch Berstscheiben und/oder Reißdrähte dienen. Bei einer Explosion werden elektrische Leitungen zerstört und als elektrisches Signal erfasst.

Der Sensor ist dazu ausgeführt, bei einer Explosion ein Explosionssignal zu erzeugen. Der Sensor ist mit einer Steuerungseinheit ist Signalverbindung, um das Explosionssignal zu übermitteln. Die Steuerungseinheit ist mit der Anhalteeinheit in Signalverbindung. Die Steuerungseinheit ist dazu eingerichtet, nach Erhalt des Explosionssignals ein Anhaltesignal zu erzeugen und an die Anhalteeinheit zu übermitteln. Die Anhalteeinheit ist dazu eingerichtet, nach Erhalt des Anhaltesignals die Drehbewegung des Zellenrades anzuhalten. Das Anhalten erfolgt in einem veränderlich festlegbaren Anhaltezeitraum, wobei die Größe des Anhaltezeitraums im Wesentlichen von der Drehgeschwindigkeit des Zellenrades, der Anzahl der Zellenradkammern und/oder von der Größe des Einlaufschachts und/oder des Auslaufschachts abhängt. Typische Drehzahlen für derartige Zellenradschleusen betragen zwischen 5 min⁻¹ und 100 min⁻¹, insbesondere zwischen 8 min⁻¹ und 100 min⁻¹ und insbesondere zwischen 15 min⁻¹ und 60 min⁻¹.

Der Anhaltezeitraum beträgt insbesondere höchstens 1 s, insbesondere höchstens 0,5 s, insbesondere höchstens 0,3 s, insbesondere höchstens 0,2 s, insbesondere höchstens 0,15 s, insbesondere höchstens 0,12 s und insbesondere höchstens 0,1 s.

Eine Zellenradschleuse gemäß Anspruch 2 ist unkompliziert und robust ausgeführt. Insbesondere ist die Anhalteeinheit mechanisch mit dem Zellenrad, insbesondere mit einer Zellenradwelle des Zellenrades, gekoppelt.

Eine Zellenradschleuse gemäß Anspruch 3 ist unkompliziert ausgeführt. Ein Bremsmotor, insbesondere ein Getriebebremsmotor, kann unaufwändig bei einer Zellenradschleuse nachgerüstet werden. Insbesondere kann eine mit einem Bremsmotor ausgerüstete Zellenradschleuse nachträglich zu einer erfindungsgemäßen Zellenradschleuse ertüchtigt werden. Als Bremsmotor dient insbesondere ein Niederspannungs-Asynchronmotor. Der Bremsmotor funktioniert als Motorbremse. Der Bremsmotor umfasst insbesondere eine mechanische Bremse. Die mechanische Bremse ist insbesondere an dem Bremsmotor lüfterseitig angeordnet. Die mechanische Bremse umfasst insbesondere eine Scheibenbremse mit Kupplung, die mittels Federn aktiviert wird, wenn der Bremsmotor stromlos geschaltet wird. Im Betrieb der Zellenradschleuse ist die Bremse gelöst, insbesondere mittels einer Magnetspule, sodass der Bremsmotor ungebremst, also frei, drehen kann. Das mit der mechanischen Bremse auf den Bremsmotor ausgeübte Brems-Drehmoment kann durch Auswahl der Art und/oder der Anzahl der verwendeten Federn gezielt festgelegt werden. Die Art der Feder ist insbesondere durch deren Federkonstante festgelegt. Es ist insbesondere möglich, für verschieden große Zellenradschleusen das Brems-Drehmoment gezielt festzulegen.

Insbesondere dient der Bremsmotor auch als Drehantrieb für die Zellenradschleuse.

Eine Zellenradschleuse gemäß Anspruch 4 ist mechanisch unkompliziert ausgeführt. Ein Blockiermittel ermöglicht ein unmittelbares Blockieren der Drehbewegung des Zellenrades. Dazu wirkt das Blockiermittel insbesondere mit einer korrespondierenden Blockierausnehmung des Zellenrades zusammen. Insbesondere sind mehrere Blockierausnehmungen an dem Zellenrad, insbesondere an der Zellenradwelle, ausgebildet. Die Blockierausnehmung ist insbesondere eine in radialer Richtung bezüglich der Längsachse ausgebildete Vertiefung und/oder eine radiale Durchgangsöffnung, in die das Blockiermittel in radialer Richtung eingreifen kann. Das Blockiermittel ist insbesondere ein radial verlagerbarer Bolzen oder Steg.

Zusätzlich oder alternativ kann die mindestens eine Blockierausnehmung auch an einem Mitnehmer der Zellenradwelle ausgebildet sein. Der Mitnehmer ist insbesondere scheibenartig ausgeführt und insbesondere drehfest mit der Zellenradwelle verbunden, insbesondere einteilig angeformt. Der Mitnehmer dreht mit der Zellenradwelle um die Längsachse, wobei die Blockierausnehmungen als Durchgangslöcher der Scheibe ausgeführt und in Umfangsrichtung an der Scheibe angeordnet sind. In diesem Fall ist das Blockiermittel als axial verlagerbarer Bolzen oder Steg ausgeführt.

Zusätzlich oder alternativ kann das Blockiermittel auch an einem oder beiden Seitendeckeln angeordnet sein und einen axial verlagerbaren Bolzen oder Steg aufweisen. Bei Betätigung des Blockiermittels wird der Bolzen oder Steg in den Innenraum des Gehäuses verlagert, um eine Drehbewegung des Zellenrades an den Zellenradflügeln zu blockieren. Bei dieser Ausgestaltung ist die Blockierausnehmung als eine zwischen zwei Zellenradflügeln begrenzte Zellenradkammer ausgebildet. Das Blockiermittel ist insbesondere exzentrisch zur Drehachse an dem Seitendeckel angeordnet.

Das Blockiermittel ermöglicht insbesondere ein formschlüssiges Blockieren der Drehbewegung des Zellenrades. Es ist auch möglich, mehrere der vorstehend beschriebenen, unterschiedlich ausgeführten Blockiermittel an einer Zellenradschleuse anzuordnen. Das mindestens eine Blockiermittel ermöglicht ein unmittelbares Blockieren des Zellenrades und insbesondere ein unmittelbares anhalten des Zellenrades. Die Anhalteeinheit mit einem derartigen Blockiermittel wird auch als Schnellschussvorrichtung bezeichnet. Die Schnellschussvorrichtung garantiert, dass unmittelbare Anhalten der Zellenradschleuse unter höchsten Sicherheitsansprüchen.

Eine Zellenradschleuse gemäß Anspruch 5 ermöglicht insbesondere ein Anhalten des Zellenrades mit reduzierter Verzögerung. Insbesondere kann ein Bremsmittel der Anhalteeinheit drehpositionsunabhängig auf das Zellenrad einwirken und die Drehbewegung des Zellenrades bremsen. Das Bremsmittel ermöglicht ein kraftschlüssiges Bremsen der Drehbewegung des Zellenrades. Das Bremsmittel wirkt insbesondere mechanisch. Das Bremsmittel ist in Form von radial an das Zellenrad, insbesondere an die Zellenradwelle, anpressbare Bremsbacken ausgeführt. Zusätzlich oder alternativ kann das Bremsmittel magnetisch wirken, insbesondere in Form einer Wirbelstrombremse. Die Wirbelstrombremse kann insbesondere mit einer Reibbremse kombiniert sein, die insbesondere erst zum Ende des Bremsvorgangs eingreift, insbesondere wenn die Drehzahl des Zellenrads bereits reduziert ist und insbesondere höchstens 5 min⁻¹, insbesondere höchstens 3 min⁻¹ und insbesondere 1 min⁻¹ beträgt.

Das Bremsmittel ist insbesondere eine separate Bremse und/oder Klemmvorrichtung. Die separate Bremse und/oder Klemmvorrichtung kann insbesondere an einem der Seitendeckel angeordnet sein und mit einer Verlängerung der Zellenradwelle zusammenwirken, die durch den jeweiligen Seitendeckel hindurch aus dem Gehäuse herausgeführt ist. Die separate Bremse kann insbesondere auch als Zusatzbremse an der Antriebswelle an dem Getriebe des Zellenradantriebs angeordnet sein.

Als Bremsmittel kann auch eine Dichtung dienen, die im Gehäuse der Zellenradschleuse angeordnet ist. Die Dichtung liegt axial und/oder radial an einer Seitenscheibe des Zellenrads an. Insbesondere sind zwei Dichtungen vorgesehen, die jeweils an einer Seitenscheibe anliegen. Aufgrund des großen Dichtungsdurchmessers wird eine hohe Bremswirkung an der Seitenscheibe des Zellenrads erzeugt. Insbesondere kann die Bremskraft, insbesondere das Bremsmoment, über eine Verstellung einer Dichtungskassette und/oder über einen verstellbaren Anpressring, insbesondere eine axiale Anpresskraft der Dichtung gegen die Seitenscheibe, veränderlich eingestellt werden. Es ist insbesondere sichergestellt, dass nach Beenden der Antriebsdrehbewegung das Zellenrad innerhalb eines vorgegebenen Anhaltewegs zum Stillstand kommt. Die Dichtungskassette und/oder der verstellbare Anpressring sind insbesondere am Seitendeckel gehalten und insbesondere daran integriert ausgeführt. Das Blockiermittel in Form der Dichtung ist insbesondere passiv ausgeführt. Eine Aktivierung der Anhalteeinheit erfolgt in diesem Fall dadurch, dass der Drehantrieb des Zellenrades beendet wird.

Zusätzlich oder alternativ kann die Dichtung auch in radialer Richtung gegen die Seitenscheibe angepresst werden. Dazu dient insbesondere ein konisches Verstellelement, insbesondere ein Ringelement mit konischer Innenfläche, die mit einer entsprechenden konischen Gegenfläche eines Gegenelements korrespondiert.

Eine Zellenradschleuse gemäß Anspruch 6 ist unkompliziert nachrüstbar. Die Anhalteeinheit kann insbesondere nachträglich an der Zellenradschleuse, insbesondere an dem Gehäuse, montiert werden. Die Zugänglichkeit der Anhalteeinheit ist verbessert. Dadurch, dass das Zellenrad, insbesondere die Zellenradwelle, unkompliziert durch eine axiale Verlängerung aus dem Gehäuse herausgeführt werden kann, ist die Zusammenwirkung mit der Anhalteeinheit unkompliziert möglich.

Eine Zellenradschleuse gemäß Anspruch 7 ist kompakt und insbesondere mechanisch robust ausgeführt. Die Anhalteeinheit ist am Gehäuse gehalten und insbesondere direkt oder indirekt an einem der Seitendeckel befestigt.

Eine Zellenradschleuse gemäß Anspruch 8 gewährleistet ein unmittelbares Drehantreiben des Zellenrades. Das Zellenrad wird aktiv drehangetrieben. Der Drehantrieb ist ein Motor, insbesondere ein Elektromotor. Die kinematische Kopplung des Drehantriebs mit dem Zellenrad erfolgt insbesondere mittels eines Getriebes und/oder mittels eine Drehantriebsmittels wie beispielsweise mittels einer Antriebskette oder eines Antriebsriemens.

Eine Zellenradschleuse gemäß Anspruch 9 erleichtert die unmittelbare Erfassung einer Drehbewegung des Zellenrades.

Ein Schutzsystem gemäß Anspruch 10 gewährleistet eine Reduzierung des Anhaltezeitraums, in dem die Steuerungseinheit eine kurze Reaktionszeit aufweist. Als Reaktionszeit der Steuerungseinheit wird der Zeitraum verstanden, den die Steuerungseinheit benötigt, bis das Anhaltesignal nach der Explosion bei der Anhalteeinheit angekommen ist.

Ein Drehgeber am Schutzsystem gemäß Anspruch 11 gewährleistet eine Überwachung der Drehbewegung des Zellenrades, insbesondere auch zu einem Zeitpunkt, nachdem das Anhaltesignal erzeugt und/oder die Anhalteeinheit ausgelöst worden ist. Es ist dadurch insbesondere möglich, dass das Schutzsystem mehrere Anhalteeinheiten aufweisen kann, wobei mindestens eine zusätzliche Anhalteeinheit aktiviert werden kann, wenn ein erforderliches Anhalten infolge der Aktivierung einer ersten Anhalteeinheit nicht erfolgt. Insbesondere erfolgt mittels der mehreren Anhalteeinheiten ein gestuftes Aktivieren und damit ein gestufter Anhalteprozess. Die Überwachung des Anhaltevorgangs der Zellenradwelle ist mittels des Drehgebers und der Steuerungseinheit möglich.

Sowohl die in den Patentansprüchen angegebenen Merkmale als auch die in dem nachfolgenden Ausführungsbeispiel des erfindungsgemäßen Schutzsystems angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung eines erfindungsgemäßen Schutzsystems mit einer Zellenradschleuse,
- Fig. 2: eine perspektivische Ansicht der Zellenradschleuse gemäß Fig. 1,
- Fig. 3: eine Draufsicht auf die Zellenradschleuse gemäß Fig. 2,
- Fig. 4: eine Seitenansicht der Zellenradschleuse gemäß Fig. 2,
- Fig. 5: eine schematische Längsschnittdarstellung einer Zellenradschleuse gemäß einem zweiten Ausführungsbeispiel mit einem Bremsmotor als Anhalteeinheit,
- Fig. 6: eine Fig. 5 entsprechende Darstellung einer Zellenradschleuse gemäß einem dritten Ausführungsbeispiel mit einem Blockiermittel für die Zellenradflügel als Anhalteeinheit,
- Fig. 7: eine Fig. 5 entsprechende Darstellung einer Zellenradschleuse gemäß einem vierten Ausführungsbeispiel mit einem Blockiermittel für die Zellenradwelle als Anhalteeinheit,
- Fig. 8: eine Fig. 5 entsprechende Darstellung einer Zellenradschleuse gemäß einem fünften Ausführungsbeispiel mit einem Bremsmittel als Anhalteeinheit, das am Getriebe des Zellenradantriebs 18 angeordnet ist,
- Fig. 9: eine Fig. 5 entsprechende Darstellung einer Zellenradschleuse gemäß einem sechsten Ausführungsbeispiel mit einem Bremsmittel in Form einer Dichtung im Gehäuse als Anhalteeinheit,
- Fig. 10: eine Fig. 6 entsprechende Darstellung einer Zellenradschleuse gemäß einem siebten Ausführungsbeispiel mit einer zusätzlichen Anhalteeinheit in Form eines Bremsmittels gemäß Fig. 2 bis 4.

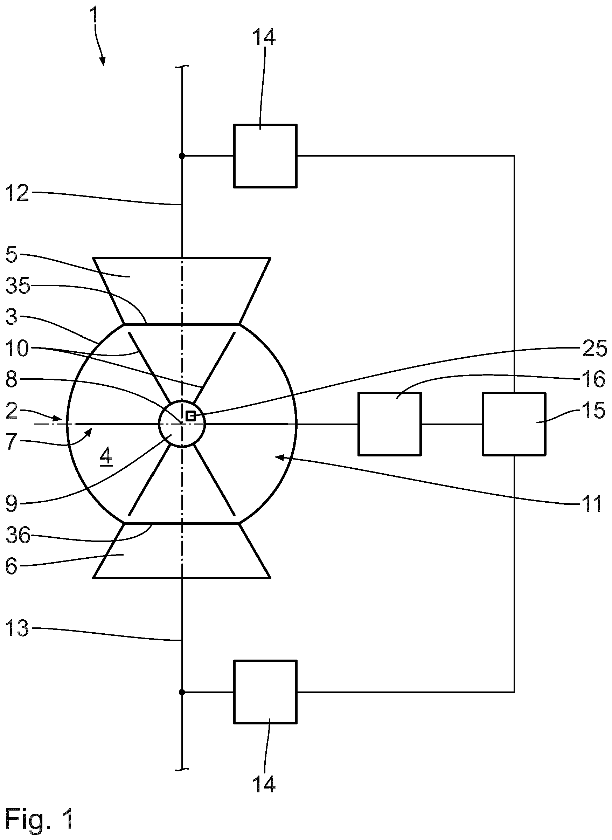

Ein in Fig. 1 rein schematisch dargestelltes und als Ganzes mit 1 gekennzeichnetes Schutzsystem umfasst eine Zellenradschleuse 2, die ein Gehäuse 3 umfasst. Das Gehäuse 3 weist einen Innenraum 4, in den an einer Einlauföffnung 35 ein Einlaufschacht 5 einmündet und aus dem an einer Auslauföffnung 36 ein Auslaufschacht 6 ausmündet. In dem Innenraum 4 ist ein Zellenrad 7 angeordnet und um eine Längsachse 8 drehantreibbar gelagert. Das Zellenrad 7 umfasst eine sich entlang der Längsachse 8 erstreckende Zellenradwelle 9 und mehrere daran befestigte Zellenradflügel 10 auf. Zwischen zwei in Umfangsrichtung der Zellenradwelle 9 angeordneten Zellenradflügeln ist jeweils eine sogenannte Zellenradkammer 11 gebildet.

Die Zellenradschleuse 2 ist als Austragsschleuse ausgeführt. Das bedeutet insbesondere, dass der Einlaufschacht 5 und der Auslaufschacht 6 jeweils quer, insbesondere senkrecht zur Längsachse 8 orientiert sind.

Die Zellenradschleuse 2 kann auch als Durchblasschleuse ausgeführt sein, bei der der Auslaufschacht 6 insbesondere parallel zur Längsachse 8 orientiert ist.

An der Zellenradwelle 9 ist ein Drehgeber 25 angeordnet, der mit einer Steuerungseinheit 15 in Signalverbindung steht. Der Drehgeber 25 ist insbesondere außerhalb des Gehäuse 3 angeordnet.

An den Einlaufschacht 5 ist eine erste Schüttgutförderleitung 12 angeschlossen. Über die erste Schüttgutförderleitung 12 wird Schüttgut der Zellenradschleuse 2 zugeführt.

An den Auslaufschacht 6 ist eine zweite Schüttgutförderleitung 13 angeschlossen. Über die zweite Schüttgutförderleitung 13 wird Schüttgut aus der Zellenradschleuse 2 abgeführt.

An die Schüttgutförderleitungen 12, 13 ist jeweils mindestens ein Sensor 14 angeschlossen. Es ist auch denkbar, entlang der Schüttgutförderleitungen 12, 13 jeweils mehrere Sensoren 14 anzubringen.

Die Sensoren 14 stehen mit der Steuerungseinheit 15 in Signalverbindung. Die Steuerungseinheit 15 steht mit einer Anhalteeinheit 16 in Signalverbindung. Die Anhalteeinheit 16 dient zum gezielten Anhalten einer Drehbewegung des Zellenrades 7 um die Längsachse 8. Die Anhalteeinheit 16 steht mit dem Zellenrad 7 in unmittelbarer Wirkverbindung. Die Anhalteeinheit 16 ist Teil der Zellenradschleuse 2. Die Anhalteeinheit 16 ist außerhalb des Gehäuses 3 angeordnet.

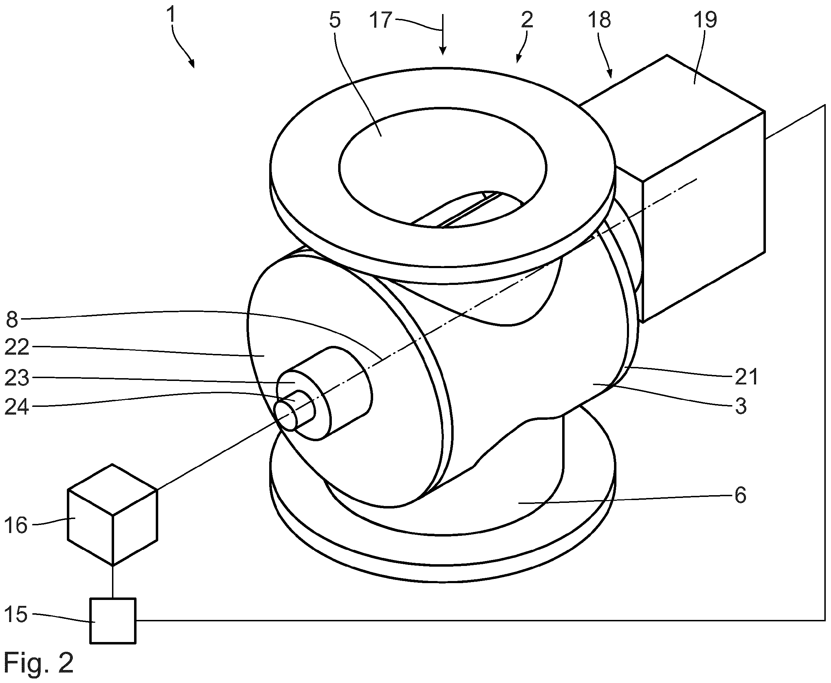

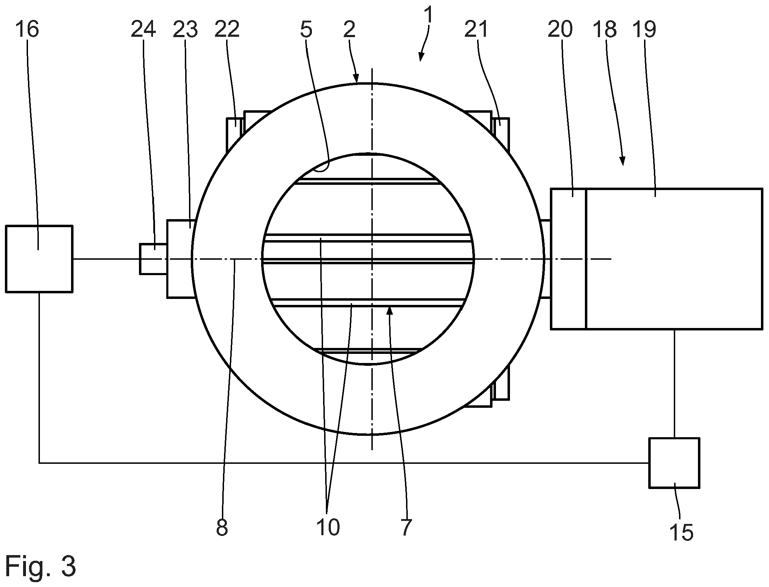

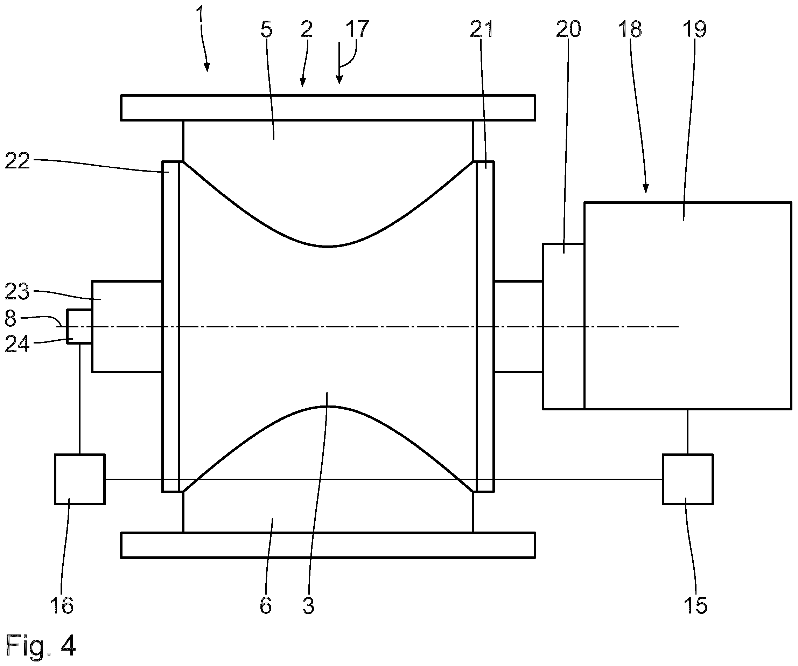

Nachfolgend wird anhand von Fig. 2 bis 4 ein Ausführungsbeispiel einer Zellenradschleuse näher erläutert.

Schüttgut kann die Zellenradschleuse 2 von dem Einlaufschacht 5 durch den Innenraum 4 zu dem Auslaufschacht 6 entlang einer Materialströmungsrichtung 17 durchströmen. Der Innenraum 4 des Gehäuses 3 ist im Wesentlichen zylindrisch ausgeführt und ist insbesondere konzentrisch zur Längsachse 8 ausgerichtet. Die Längsachse 8 dient als Symmetrieachse für den Innenraum 4. Insbesondere ist die Längsachse 8 senkrecht zur Materialströmungsrichtung 17 orientiert.

Das Zellenrad 7 ist mittels eines Zellenradantriebs 18 drehantreibbar. Der Zellenradantrieb 18 wirkt mit der Zellenradwelle 9 zusammen. Hierzu greift ein die Zellenradwelle 9 verlängernder, nicht dargestellter Kupplungszapfen, in eine korrespondierende Aufnahme einer nicht näher dargestellten Antriebsverbindung des Zellenradantriebs 18 ein. Der Zellenradantrieb 18 umfasst einen Drehantrieb 19 und ein damit gekoppeltes Untersetzungsgetriebe 20. Zusätzlich kann ein nicht näher dargestelltes Kraftübertragungselement vorhanden sein, insbesondere ein Kettenantrieb, ein Riemenantrieb und/oder eine Zwischenwelle.

Das Gehäuse 3 ist entlang der Längsachse 8 mit Seitendeckeln geschlossen. Ein erster Seitendeckel 21 ist dem Zellenradantrieb 18 zugewandt angeordnet. Ein zweiter Seitendeckel 22 ist an der gegenüberliegenden Stirnseite des Gehäuses 3 angeordnet, die dem Zellenradantrieb 18 abgewandt orientiert ist. An dem zweiten Seitendeckel 22 ist ein Lager 23 angeordnet, in dem ein Wellenende der Zellenradwelle 9 drehbar, aber axial unverschiebbar gelagert ist. Das Lager 23 ist von dem zweiten Seitendeckel 22 getragen. Die Seitendeckel 21, 22 sind mittels nicht näher dargestellter Befestigungselemente, insbesondere Befestigungsschrauben, an dem Gehäuse 3 lösbar befestigt.

Die Zellenradwelle 9 ist in axialer Richtung bezüglich der Längsachse 8 mit einer Zellenradwellenverlängerung 24 durch das Lager 23 hindurchgeführt und insbesondere abgedichtet. Die Zellenradwellenverlängerung 24 bildet ein freies Ende der Zellenradwelle 9. An der Zellenradwellenverlängerung 24 greift die Anhalteeinheit 16 an, die in Fig. 2 bis 4 rein schematisch dargestellt ist. Gemäß dem gezeigten Ausführungsbeispiel ist die Anhalteeinheit 16 als Bremsmittel ausgeführt, insbesondere in Form einer Klemmvorrichtung oder als separate Bremse. Das Bremsmittel ist an dem zweiten Seitendeckel 22 angeordnet. Das Bremsmittel kann unmittelbar mit der Zellenradwellenverlängerung 24 zusammenwirken. Die Zugänglichkeit der Zellenradwelle 9 bzw. der Zellenradwellenverlängerung 24 ist unkompliziert. Die Anhalteeinheit 16 steht mit der Steuerungseinheit 15 in Signalverbindung. Insbesondere steht die Steuerungseinheit 15 mit dem Zellenradantrieb 18, insbesondere mit dem Drehantrieb 19 in Signalverbindung.

Das Bremsmittel kann auch an dem ersten Seitendeckel 21 angeordnet sein, insbesondere in axialer Richtung der Längsachse 8 zwischen dem ersten Seitendeckel 21 und dem Zellenradantrieb 18.

Nachfolgend wird die Funktion des Schutzsystems 1 näher erläutert.

Eine Explosion, die auf eine der Schüttgutförderleitungen 12, 13 wirkt, wird von mindestens einem der Sensoren 14 erfasst. Der jeweilige Sensor 14 erzeugt ein Explosionssignal und übermittelt dies an die Steuerungseinheit 15. Die Steuerungseinheit 15 erzeugt ein Anhaltesignal und übermittelt dies an die Anhalteeinheit 16. Die Anhalteeinheit 16 wirkt unmittelbar mit dem Zellenrad 7, insbesondere der Zellenradwelle 9, zusammen und bewirkt ein Anhalten der Drehbewegung des Zellenrades 7 innerhalb des Anhaltezeitraums. Der Anhaltezeitraum ist so gewählt, das ein unbeabsichtigtes Ausbreiten der Explosion von der einen Schüttgutförderleitung 12, 13 in die jeweils andere Schüttgutförderleitung 13, 12 durch die Zellenradschleuse 2 hindurch zuverlässig vermieden ist. Das Schutzsystem 1 mit der erfindungsgemäßen Zellenradschleuse 2 erfüllt hohe Sicherheitsstandards.

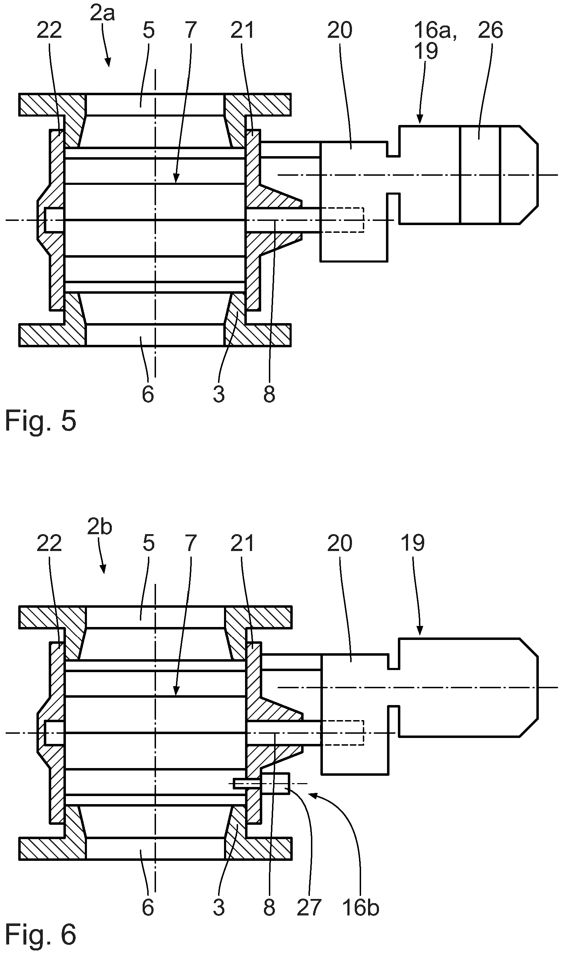

Im Folgenden wird unter Bezugnahme auf Fig. 5 ein zweites Ausführungsbeispiel beschrieben. Konstruktiv identische Teile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei der Zellenradschleuse 2a ist die Anhalteeinheit 16a als Bremsmotor ausgeführt. Besonders unkompliziert ist die Integration der Anhalteeinheit 16a, wenn der Drehantrieb 19 als Bremsmotor ausgeführt ist, also eine zusätzliche, separate, aber integrierte Bremse 26 aufweist. Alternativ kann der Bremsmotor auch zusätzlich zu dem Drehantrieb 19 vorhanden sein.

Im Folgenden wird unter Bezugnahme auf Fig. 6 ein drittes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Bei der Zellenradschleuse 2b weist die Anhalteeinheit 16b ein Blockiermittel 27 auf. Das Blockiermittel 27 ist als axial verlagerbarer Stift oder Steg ausgeführt und an einem der Seitendeckel 21, 22 angeordnet. Es können auch mehrere Blockiermittel 27 vorhanden sein, die an dem ersten Seitendeckel 21 und/oder an dem zweiten Seitendeckel 22 angeordnet sind. Es ist insbesondere denkbar, die Blockiermittel 27 an beiden Seitendeckeln 21, 22 anzuordnen. Das Blockiermittel 27 ist radial versetzt bezüglich der Längsachse 8 an einem der Seitendeckel 21, 22 angeordnet. Bei Betätigung des Blockiermittels 27 wird der Steg oder Stift axial verlagert, nämlich durch den Seitendeckel 21, 22 hindurch in den Innenraum 4 des Gehäuses 3. Insbesondere ragt der Stift oder Steg an der inneren Stirnfläche des Seitendeckels 21, 22 soweit in den Innenraum 4 hinein, dass er zwischen zwei Zellenradflügel eingreift und damit die Drehbewegung des Zellenrads 7 unmittelbar blockiert.

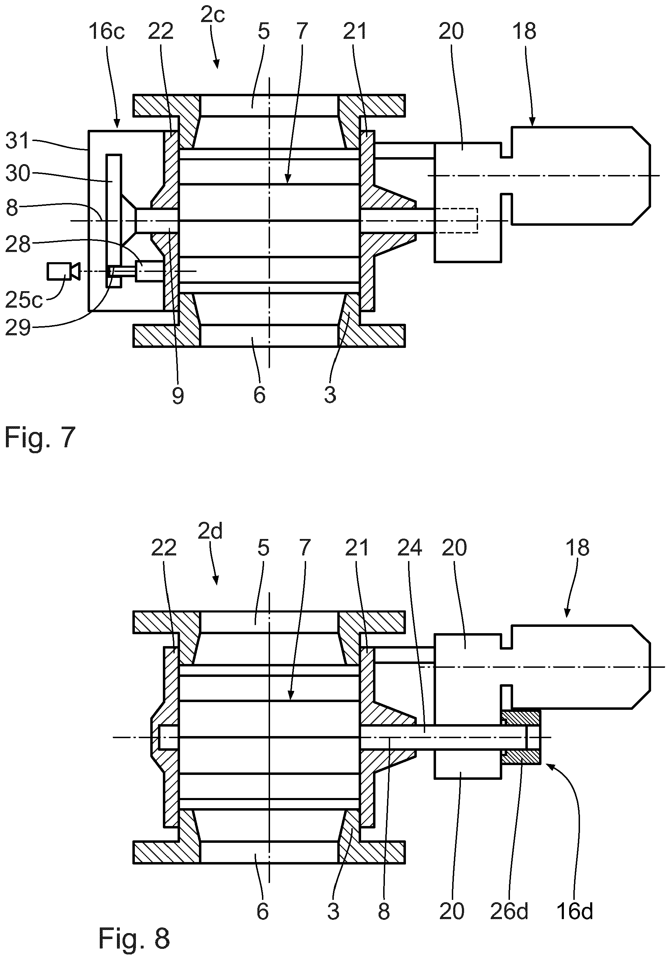

Im Folgenden wird unter Bezugnahme auf Fig. 7 ein viertes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Bei der Zellenradschleuse 2c weist die Anhalteinheit 16c ein Blockiermittel 28 auf, das an einem der Seitendeckel 21, 22 und exzentrisch zur Längsachse 8 angeordnet ist. Es können auch mehrere Blockiermittel 28 vorhanden sein, die an dem ersten Seitendeckel 21 und/oder an dem zweiten Seitendeckel 22 angeordnet sind. Das Blockiermittel 28 ist als axial verlagerbarer Stift oder Steg ausgeführt, wobei die Verlagerungsrichtung weg vom Innenraum 4 des Gehäuses 3 gerichtet ist. Das Blockiermittel 28 kann in eine von mehreren Blockierausnehmungen 29 eingreifen, die als Vertiefungen oder Durchgangsbohrungen an einem Mitnehmer 30 der Zellenradwelle 9 ausgeführt sind. Der Mitnehmer 30 ist insbesondere scheibenartig ausgeführt und an einer Verlängerung der Zellenradwelle 9 außerhalb des Gehäuses 3 angeordnet. Der scheibenartige Mitnehmer 30 ist drehfest bezüglich einer Drehbewegung um die Längsachse 8 mit der Zellenradwelle 9 verbunden. Insbesondere ist der Mitnehmer 30 einteilig mit der Zellenradwelle 9 ausgeführt. In Umfangsrichtung um die Längsachse 8 sind an dem Mitnehmer 30 mehrere Blockierausnehmungen 29 angeordnet. Die Blockierausnehmungen 29 sind insbesondere kreisförmige Bohrungen oder sich in Umfangsrichtung erstreckende Langlöcher.

Bei diesem Ausführungsbeispiel kann der Drehgeber 25c als induktiver Näherungsschalter ausgeführt sein, der an dem Mitnehmer 30 angeordnet ist. Der Näherungsschalter 25c ist axial beabstandet zu dem Mitnehmer 30 angeordnet. In radialer Richtung bezogen auf die Längsachse 8 ist der Näherungsschalter 25c an der Umfangslinie angeordnet, an der die Blockierausnehmungen 29 angeordnet sind. Der Näherungsschalter 25c dient zur Erfassung der Blockierausnehmungen 29 bei einer Drehbewegung der Zellenradwelle 9 also des Mitnehmers 30. Der Näherungsschalter 25c steht insbesondere in Signalverbindung mit der in Fig. 7 nicht dargestellten Steuerungseinheit 15.

Bei Betätigung des Blockiermittels 28 wird dieses axial verlagert und kann in eine der Blockierausnehmungen 29 am Mitnehmer 30 eingreifen und damit unmittelbar die Drehbewegung der Zellenradwelle 9 blockieren.

Aus Sicherheitsgründen, insbesondere zur Verletzungsvermeidung, ist die Anhalteeinheit 16c, insbesondere das Blockiermittel 28 und der Mitnehmer 30, in einem Sicherungsgehäuse 31 eingehaust. Die Anhalteinheit 16c ist gemäß dem gezeigten Ausführungsbeispiel auf der Gehäuseseite angeordnet, die den Zellenradantrieb 18 gegenüberliegend angeordnet ist. Die Anhalteeinheit 16c kann auch auf der Gehäuseseite angeordnet sein, an der der Zellenradantrieb 18 angeordnet ist.

Im Folgenden wird unter Bezugnahme auf Fig. 8 ein fünftes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Die Zellenradschleuse 2d weist eine separate Bremse 26d auf, die an dem Getriebe 20 des Zellenradantriebs 18 angeordnet ist. Dazu ist die Zellenradwelle 9 mit einer Zellenradwellenverlängerung 24 axial durch das Getriebe 20 hindurchgeführt, sodass die separate Bremse 26d unmittelbar auf das Getriebe 20 aufgesetzt werden kann. Die separate Bremse 26d kann unkompliziert nachgerüstet werden. Es ist insbesondere nicht erforderlich, dass die Zellenradwelle 9 beidseitig aus dem Gehäuse 3 hinausgeführt wird.

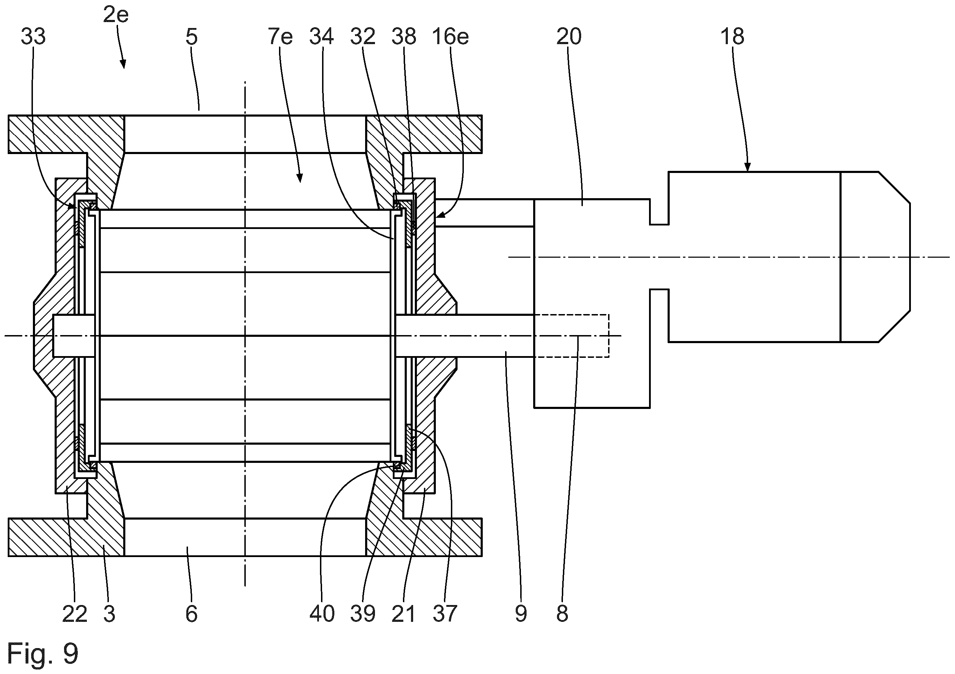

Im Folgenden wird unter Bezugnahme auf Fig. 9 ein sechstes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

Bei der Zellenradschleuse 2e ist die Anhalteeinheit 16e passiv ausgeführt. Die Anhalteeinheit 16e weist mindestens eine Dichtung 32 auf, die mittels einer Dichtungskassette 33 in axialer Richtung bezüglich der Längsachse 8 gegen eine Seitenscheibe 34 des Zellenrads 7e anpressbar ist. Es ist auch möglich, je Seitenscheibe 34 mehrere, insbesondere zwei, Dichtungen 32 zu verwenden.

Infolge der axialen Anpressung wird die Dichtung 32, die insbesondere als O-Ring ausgeführt ist, deformiert und weist insbesondere eine ballige, unrunde Querschnittsform auf. Die Dichtung 32 dichtet insbesondere axial und/oder radial bezogen auf die Längsachse 8 ab. Die Dichtung 32 ist insbesondere eine Axialdichtung.

Die Axialdichtung 32 wird insbesondere mittels eines Axial-Anpresselements 38 axial gegen die Seitenscheibe 34 gepresst.

Die Dichtungskassette 33 ist an dem Seitendeckel 21, insbesondere an dessen Innenseite, befestigt und axial verlagerbar angeordnet. Die Dichtungskassette 33 kann mittels des in Fig. 9 rein schematisch dargestellten Axial-Anpresselements 38 axial relativ zu dem Seitendeckel 21 und relativ zu dem Zellenrad 7e, also relativ zu den Seitenscheiben 34, verlagert werden. Insbesondere sind mehrere Axial-Anpresselemente 38 je Dichtungskassette 33 vorhanden. Als Axial-Anpresselement 38 dient insbesondere eine Stellschraube, die im Seitendeckel 21 gehalten ist und ein Bewegungsgewinde aufweist, mit dem eine axiale Verlagerung der Dichtungskassette 33 ermöglicht wird. Das Axial-Anpresselement 38 kann auch als Axial-Aktuator ausgeführt sein, der insbesondere pneumatisch, hydraulisch und/oder elektrisch ausgeführt ist.

Die Dichtungskassette 33 weist einen Scheibenabschnitt 37 auf, der in axialer Richtung der Längsachse 8 zwischen der Seitenscheibe 34 und dem Seitendeckel 21 angeordnet ist. Der Scheibenabschnitt 37 ist als Ringscheibe ausgeführt, wobei durch die zentrale Öffnung der Ringscheibe die Zellenradwelle 9 hindurchgeführt und im Seitendeckel 21 aufgenommen ist.

Einstückig mit dem Scheibenabschntit 37 ist ein Ringbund 39 ausgeführt, der sich in axialer Richtung der Längsachse 8 erstreckt. Der Ringbund 39 weist einen Innenradius auf, der größer ist als ein Außenradius der Seitenscheibe 34. Der Ringbund 39 weist an seinem axialen Ende, das dem Scheibenabschnitt 37 abgewandt ist, einen Absatz 40 auf. In den Absatz 40 ist die Axialdichtung 32 eingelegt. Der Anpressdruck und das von der Axialdichtung 32 verursachte Bremsmoment auf das Zellenrad 7e können derart, insbesondere veränderlich, eingestellt werden, dass bei Beendigung des aktiven Drehantriebs ein Anhalten des Zellenrads 7e in dem vorgegebenen Anhaltezeitraum erfolgt.

Gemäß einer in den Figuren nicht dargestellten Variante ist es möglich, eine zusätzliche radiale Anpressung des Dichtungselements 32 dadurch zu erreichen, dass die Dichtungskassette zumindest anteilig auch eine radiale Anpressung ermöglicht. Dazu kann die Dichtungskassette im Bereich des Ringbundes eine konische Innenkontur aufweisen, die mit einer entsprechenden konischen Gegenkontur eines radialen Anpressrings eine radiale Anpresskraft auf das Dichtungselement ausgibt.

Die Zellenradschleuse 2e ist als Austragsschleuse ausgeführt.

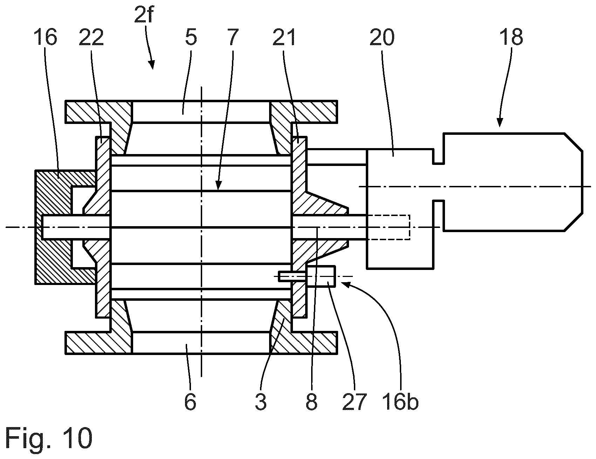

Im Folgenden wird unter Bezugnahme auf Fig. 10 ein siebtes Ausführungsbeispiel beschrieben. Konstruktiv identische Teile erhalten dieselben Bezugszeichen wie bei den vorherigen Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

Die Zellenradschleuse 2f entsprich im Wesentlichen der Zellenradschleuse 2b gemäß Fig. 6 und weist zusätzlich eine Anhalteeinheit 16 in Form eines Bremsmittels auf, das insbesondere analog dem Bremsmittel 16 gemäß Fig. 2 bis 4 ausgeführt ist.

Es ist möglich, an der Zellenradschleuse 2f mehrere Anhalteeinheiten auszuführen und miteinander zu kombinieren. Es ist insbesondere möglich, mindestens eine Anhalteeinheit mit einem Bremsmotor oder einem Bremsmittel gemäß Fig. 2 bis 5, 8 und 9 einerseits und mindestens eine Anhalteeinheit mit einem Blockiermittel gemäß Fig. 6 oder 7 andererseits zu kombinieren. Im Betrieb kann zunächst die Anhalteeinheit mit Bremsmotor oder Bremsmittel aktiviert werden. Diese Anhalteeinheit arbeitet im Wesentlichen zerstörungsfrei und ist wiederholt einsetzbar. Wenn es mit dieser Anhalteeinheit nicht zuverlässig gelingt, die Drehbewegung des Zellenrades anzuhalten, kann zusätzlich die zusätzliche Anhalteeinheit mit einem Blockiermittel aktiviert werden, die ein unmittelbares Blockieren des Zellenrades sicherstellt. Diese Anhalteeinheit mit Blockiermittel ermöglicht eine erhöhte Sicherheit, wird aber aufgrund ihrer Wirkungsweise bei der Betätigung beschädigt oder zerstört, sodass ein Austausch erforderlich werden wird.

Durch eine Kombination verschiedener Anhalteeinheiten ist es möglich, für eine Zellenradschleuse ein Anhalteprofil gezielt einzustellen.

### Bezugszeichenliste

- 1: Schutzsystem
- 2: Zellenradschleuse
- 3: Gehäuse
- 4: Innenraum
- 5: Einlaufschacht
- 6: Auslaufschacht
- 7: Zellenrad
- 8: Längsachse
- 9: Zellenradwelle
- 10: Zellenradkammer
- 11: Zellenradflügel
- 12: erste Schüttgutförderleitung
- 13: zweite Schüttgutförderleitung
- 14: Sensor
- 15: Steuerungseinheit
- 16: Anhalteeinheit
- 17: Materialströmungsrichtung
- 18: Zellenradantrieb
- 19: Drehantrieb
- 20: Untersetzungsgetriebe
- 21: erster Seitendeckel
- 22: zweiter Seitendeckel
- 23: Lager
- 24: Zellenradwellenverlängerung
- 25: Drehgeber
- 26: Bremse
- 27: Blockiermittel
- 28: Blockiermittel
- 29: Blockierausnehmung
- 30: Mitnehmer
- 31: Sicherungsgehäuse
- 32: Axialdichtung
- 33: Dichtungskassette
- 34: Seitenscheiben
- 35: Einlauföffnung
- 36: Auslauföffnung
- 37: Scheibenabschnitt
- 38: Axial-Anpresselement
- 39: Ringbund
- 40: Absatz

## Patentansprüche

1. Schutzsystem, insbesondere für die Schüttgutförderung, umfassend
a. eine Zellenradschleuse (2; 2a; 2b; 2c; 2d; 2e; 2f) für Schüttgut umfassend
aa. ein einen Innenraum (4) aufweisendes Gehäuse (3) mit einer Einlauföffnung (35) und einer Auslauföffnung (36),
bb. Seitendeckel (21, 22), die den Innenraum (4) stirnseitig begrenzen,
cc. ein in dem Innenraum (4) um eine Längsachse (8) drehantreibbar angeordnetes Zellenrad (7), das an den Seitendeckeln (21, 22) gehalten ist,
dd. eine Anhalteeinheit (16; 16a; 16b; 16c; 16d; 16e) zum gezielten Anhalten einer Drehbewegung des Zellenrades (7), wobei die Anhalteeinheit (16; 16a; 16b; 16c; 16d; 16e) mit dem Zellenrad (7) zusammenwirkt,
b. eine an die Zellenradschleuse (2; 2a; 2b; 2c; 2d; 2e; 2f) angeschlossene Schüttgutförderleitung (12, 13),
c. ein entlang der Schüttgutförderleitung (12, 13) angeordneter Sensor (14) zur Erfassung einer auf die Schüttgutförderleitung (12, 13) wirkenden Explosion,
d. eine Steuerungseinheit (15), die mit dem Sensor (14) zum Erhalt eines von dem Sensor (14) erzeugten Explosionssignals in Signalverbindung steht,
wobei die Steuerungseinheit (15) mit der Anhalteeinheit (16; 16a; 16b; 16c; 16d; 16e) in Signalverbindung steht und dazu eingerichtet ist, nach Erhalt des Explosionssignals ein Anhaltesignal an die Anhalteeinheit (16; 16a; 16b; 16c; 16d; 16e) zu übermitteln,
wobei die Anhalteeinheit (16; 16a; 16b; 16c; 16d; 16e) dazu eingerichtet ist, nach Erhalt des Anhaltesignals eine Drehbewegung des Zellenrades (7) in einem veränderlich festlegbaren Anhaltezeitraum anzuhalten.

2. Schutzsystem gemäß Anspruch 1, **dadurch gekennzeichnet, dass** die Anhalteeinheit (16) mit dem Zellenrad (7), insbesondere mit einer Zellenradwelle (9) des Zellenrades (7), insbesondere mechanisch, gekoppelt ist.

3. Schutzsystem gemäß einem der vorstehenden Ansprüche, **dadurch gekennzeichnet, dass** die Anhalteeinheit (16a) einen Bremsmotor zum Bremsen der Drehbewegung des Zellenrades (7) aufweist.

4. Schutzsystem gemäß einem der vorstehenden Ansprüche, **dadurch gekennzeichnet, dass** die Anhalteeinheit (16b; 16c) ein Blockiermittel (27; 28) aufweist zum Blockieren der Drehbewegung des Zellenrades (7).

5. Schutzsystem gemäß einem der vorstehenden Ansprüche, **dadurch gekennzeichnet, dass** die Anhalteeinheit (16; 16a; 16d; 16e) ein Bremsmittel aufweist zum Bremsen der Drehbewegung des Zellenrades (7).

6. Schutzsystem gemäß einem der vorstehenden Ansprüche, **dadurch gekennzeichnet, dass** die Anhalteeinheit (16; 16a; 16b; 16c; 16d) außerhalb des Gehäuses (3) angeordnet ist.

7. Schutzsystem gemäß einem der vorstehenden Ansprüche, **dadurch gekennzeichnet, dass** die Anhalteeinheit (16; 16a; 16b; 16c; 16d) an dem Gehäuse (3), insbesondere an einem der Seitendeckel (21, 22), befestigt ist.

8. Schutzsystem gemäß einem der vorstehenden Ansprüche, **gekennzeichnet durch** einen Drehantrieb (19), der mit dem Zellenrad (7) zum Drehantreiben des Zellenrades (7) in Wirkverbindung steht.

9. Schutzsystem gemäß einem der vorstehenden Ansprüche, **gekennzeichnet durch** einen Drehgeber (25) zum Erfassen der Drehbewegung des Zellenrades (7), wobei der Drehgeber (25) insbesondere unmittelbar an der Zellenradquelle (9) befestigt und/oder außerhalb des Gehäuses (3) angeordnet ist.

10. Schutzsystem gemäß einem der vorstehenden Ansprüche, **dadurch gekennzeichnet, dass** die Steuerungseinheit (15) eine Reaktionszeit aufweist, die höchstens 0,1 s beträgt.

11. Schutzsystem gemäß einem der vorstehenden Ansprüche, **dadurch gekennzeichnet, dass** die Steuerungseinheit (15) mit dem Drehgeber (25) in Signalverbindung steht.
